(19) Europäisches Patentamt
European Patent Office
Office européen des brevets

(11) EP 4 012 449 B1

(12) **EUROPEAN PATENT SPECIFICATION**

(45) Date of publication and mention of the grant of the patent:
**25.06.2025 Bulletin 2025/26**

(21) Application number: **20851063.6**

(22) Date of filing: **08.05.2020**

(51) International Patent Classification (IPC):
***G01S 13/86*** (2006.01) ***G01S 13/87*** (2006.01)
***G01S 13/931*** (2020.01) ***G08G 1/16*** (2006.01)
***G01S 13/04*** (2006.01) ***G01S 7/40*** (2006.01)
***G01S 7/292*** (2006.01) ***G01S 7/41*** (2006.01)
***G01S 7/295*** (2006.01) ***G01S 7/35*** (2006.01)
***G01S 13/42*** (2006.01)

(52) Cooperative Patent Classification (CPC):
**G01S 13/42; G01S 7/295; G01S 7/354; G01S 7/41; G01S 13/86; G01S 13/865; G01S 13/867; G01S 13/87; G01S 13/931; G08G 1/166**

(86) International application number:
**PCT/JP2020/018610**

(87) International publication number:
**WO 2021/024562 (11.02.2021 Gazette 2021/06)**

(54) **TARGET DETECTION DEVICE**

VORRICHTUNG ZUR ERKENNUNG VON ZIELEN

DISPOSITIF DE DÉTECTION DE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2019 JP 2019145622**

(43) Date of publication of application:
**15.06.2022 Bulletin 2022/24**

(73) Proprietor: **Hitachi Astemo, Ltd.**
**Ibaraki 312-8503 (JP)**

(72) Inventors:
- **AKAMINE, Yukinori**
  **Tokyo 100-8280 (JP)**
- **YAMAMOTO, Keisuke**
  **Tokyo 100-8280 (JP)**
- **KITAYAMA, Akira**
  **Tokyo 100-8280 (JP)**
- **KURIYAMA, Akira**
  **Hitachinaka-shi, Ibaraki 312-8503 (JP)**

(74) Representative: **Mewburn Ellis LLP**
**Aurora Building**
**Counterslip**
**Bristol BS1 6BX (GB)**

(56) References cited:
**JP-A- 2009 186 260**
**JP-A- 2009 186 277**
**JP-A- 2012 058 018**
**JP-A- 2014 139 536**
**JP-A- 2014 153 874**
**JP-A- 2016 205 953**
**US-A1- 2014 218 228**
**US-A1- 2016 054 442**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 012 449 B1

## Description

### Technical Field

The present invention relates to a target detection device that detects a target using a plurality of sensors.

### Background Art

In an autonomous driving system of a vehicle, a millimeter-wave radar is used as one of sensors that detect targets such as obstacles and pedestrians with high accuracy. In the millimeter-wave radar, a plurality of reception antennas are arranged in an array, and the angular direction of the target is calculated based on amplitude/phase information of a reception signal of each antenna. The longer a distance from one end to the other end of the arranged antennas, that is, the longer an aperture length, the higher a resolution. Here, it is known that, if the antennas are arranged at intervals longer than the half of the wavelength ($\lambda/2$) of the reception signal, and the angular direction exceeds the boundary value, a virtual image is generated due to phase folding. When the virtual image is generated, there is a concern that the angular direction in which the target is actually present is erroneously calculated. Thus, the virtual image is removed to prevent an erroneous detection.

In this regard, in a radar device disclosed in PTL 1, an object is to reliably obtain an angle at which a target is actually present. The radar device includes transmission means for respectively outputting first, second, and third transmission waves from first, second, and third transmission antennas having transmission directions that are sequentially different from each other in a horizontal direction, first phase folding determination means for determining whether or not an angle of a target is an angle with phase folding, based on a first reception level of a reception signal by the first transmission antenna and a third reception level of a reception signal by the third transmission antenna, and second phase folding determination means for determining whether or not the angle of the target is the angle with phase folding, based on the determination result and a second reception level of a reception signal by the second transmission antenna.

A direction detection device disclosed in PTL 2 includes a configuration in which a position at which a target is required to be detected on an image pickup screen picked up by a CCD camera is calculated based on a distance, a relative speed, and a direction of the target, which are detected using a radar wave, and then it is determined whether or not the target is present at the calculated position. Then, a configuration as follows is made. If the target is not present, the direction is calculated again assuming that a phase difference $\Delta\theta$ of the reception signal used to calculate the direction of the target has phase folding. A prediction position at which a target object is required to be detected on the image pickup screen is calculated using the calculated direction. Then, if the target is present at the prediction position, a direction correction in which the direction used to calculate the prediction position is used as the direction of the target is performed.

PTL 3 proposes a target recognition apparatus that detects a target candidate in a basic detection area including a folding area where a target candidate may be a virtual image corresponding to a real image existing in an additional detection area. The apparatus determines presence/absence of a combination of each target candidate with an image target. A likelihood calculation section sets and updates a likelihood of a virtual image of the image target by using a determination result of the combination determination section.

PTL 4 proposes a radar device which obtains a power spectrum of an acquired beat signal and recognizes a target candidate according to a frequency peak detected from the power spectrum.

PTL 5 proposes a radar device which collates first target information corresponding to an object target candidate with second target information corresponding to a comparison target candidate. As a result of the collation, the object target candidate is determined to be either a virtual image or a real image based on the difference between a frequency peak power of the object target candidate and the frequency peak power of the comparison target candidate.

### Citation List

### Patent Literature

PTL 1: JP 2015-68724 A
PTL 2: JP 2007-263986 A
PTL 3: US 2014/218228 A1
PTL 4: JP 2012 058018 A
PTL 5: JP 2014 139536 A

### Summary of Invention

## Technical Problem

When a virtual image is generated due to phase folding in a millimeter-wave radar, according to the configuration in PTL 1, the target (virtual image) detected by determining that the angle of the target is an angle with phase folding can be removed. However, an actual target may be present at the position of the virtual image generated due to phase folding, in an overlapping manner. In such a case, in the technique disclosed in PTL 1, if the threshold value for determining phase folding is not appropriate, there is a concern that the actual target is regarded as a virtual image by the determination and is erroneously removed. The reason is as follows. When a virtual image at a deep angle position and the actual target at a shallow angle position overlap each other due to phase folding, if the transmission antenna is switched, the level of a reception signal changes by an influence of the virtual image. Thus, there is a high possibility that the actual target is overlooked and is determined to be a virtual image.
The above description is similarly applied to the configuration in PTL 2. If another target is present at the original position assuming phase folding, there is a concern that the actual target is erroneously determined to be a virtual image due to phase folding and, then removed. In this case as well, there is a concern that the actual target is set to be not detected.
An object of the present invention is to provide a target detection device that detects a target by suppressing a virtual image without overlooking an actual target even when the virtual image generated by phase folding and the actual target overlap each other.

## Solution to Problem

In a first aspect, the present invention provides a target detection device according to claim 1. In a second aspect, the present invention provides a target detection method according to claim 7.

## Advantageous Effects of Invention

According to the present invention, it is possible to obtain an effect of preventing an erroneous detection of a target due to a virtual image and preventing an undetection of a target that is actually present, and the reliability of a target detection device is improved.

## Brief Description of Drawings

[FIG. 1] FIG. 1 is a block diagram illustrating a configuration of a target detection device according to an embodiment.
[FIG. 2] FIG. 2 is a diagram illustrating a virtual image generation mechanism in a millimeter-wave radar.
[FIG. 3] FIG. 3 is a diagram illustrating a comparison of detection characteristics between the millimeter-wave radar and a wide-angle sensor.
[FIG. 4] FIG. 4 is a diagram illustrating an example of calculating a presence probability of a target when a virtual image is generated.
[FIG. 5] FIG. 5 is a diagram illustrating an example of calculating the presence probability when a position of the virtual image overlaps another target.
[FIG. 6] FIG. 6 is a flowchart illustrating an entirety of analysis processing of a target.

## Description of Embodiments

An embodiment of the present invention will be described with reference to the drawings.
FIG. 1 is a block diagram illustrating a configuration of a target detection device according to an embodiment. A target detection device 1 is configured by a first sensor 10, a second sensor 20, and a target analysis unit 30. The first sensor 10 is a millimeter-wave radar for a long distance with a small field of view. The second sensor 20 is a wide-angle sensor with a large field of view. As the wide-angle sensor 20, a medium-range radar, a stereo camera, a LiDAR, or the like is used. The target analysis unit 30 combines pieces of information (position, characteristic, detection accuracy) on targets detected by the first sensor 10 and the second sensor 20. The target analysis unit 30 corrects detection accuracies in consideration of a virtual image, and calculates a presence probability. Target information used to be combined and calculated by the target analysis unit 30 is transmitted to, for example, a driving control device 2 and used for autonomous driving control of the vehicle.
The millimeter-wave radar 10 detects a target 1 when the reception level of a millimeter-wave signal reflected by an object, an SNR, or the like exceeds a set threshold value. At this time, a detection accuracy P1 indicating how accurately the target has been detected is output by how much a detection signal level exceeds the threshold value, in addition to the position U1 of the detected target 1. Furthermore, characteristic information such as the speed V1 of the target 1 and a reflection cross-section area (target size) S1 is also obtained and output by signal processing specific to the millimeter-wave radar 10.

Similarly, the wide-angle sensor 20 outputs the position U2 and a detection accuracy P2 of the target 2, which are detected by a target detection algorithm, are output together with the characteristic information such as the speed V2 and a reflection cross-section area (target size) S2.

The operation of the target analysis unit 30 will be described. In the millimeter-wave radar 10 for a long distance with a small field of view, when a target is present outside the field of view, a virtual image of the target is generated inside the field of view and is detected. On the other hand, in the wide-angle sensor 20 having a large field of view, no virtual image is generated for the target within the field of view. That is, it is possible to also detect a target that is present at an angle that is greatly inclined from a front direction, as a real image. Further, it is possible to calculate the position at which the virtual image is generated in the field of view, from the position of the target that is actually present outside the field of view. Thus, the target analysis unit 30 corrects the influence of the virtual image, and calculates and outputs a presence probability that the target is actually present.

The virtual image transformation unit 101 performs transformation of a position by calculating a position F{U2} at which a virtual image is expected to be generated in the case of the millimeter-wave radar 10 from the position U2 of the target 2, that is detected by the wide-angle sensor 20. When the position U2 of the target 2 is at an angle close to the front direction in which a virtual image is not generated by the millimeter-wave radar 10, the virtual image transformation unit 101 is passed as it is.

The identical target determination unit 102 determines whether or not the target 1 detected by the millimeter-wave radar 10 is identical to the target 2 detected by the wide-angle sensor 20. That is, when the position F{U2} of the virtual image of the target 2, that is transformed by the virtual image transformation unit 101 overlaps the position U1 of the target 1 of the millimeter-wave radar 10, and the characteristic information such as the speed V1 and the reflection cross-section area S1 coincides with the characteristic information such as the speed V2 and the reflection cross-section area S2, it is determined that the target 1 is identical to the target 2. The accuracy in such a determination can also be made accurate, and it is effective to reflect the accuracy in target information.

When it is determined that the target 1 is identical to the target 2, the target 1 detected by the millimeter-wave radar 10 is estimated to be a virtual image of the target 2. Therefore, the accuracy correction calculation unit 103 uses the detection accuracy P1 detected by the millimeter-wave radar 10 and the detection accuracy P2 detected by the wide-angle sensor 20 to perform a correction calculation of the detection accuracies of the target 1 and the target 2 in consideration of the virtual image. The calculation result is output as the probabilities (presence probabilities) Q1 and Q2 that the target 1 and the target 2 are actually present at this position.

The combination processing unit 104 performs combination processing (weighting averaging) on the position U1 and the characteristic information (speed V1 and reflection cross-section area S1) of the target 1, and the position U2 and the characteristic information (speed V2 and reflection cross section S2) of the target 2.

When the virtual image transformation unit 101 performs coordinate transformation of the position of the target 2, a false image inverse transformation unit 105 performs inverse transformation of the position of the target 2 to the original coordinates. Then, the target positions (U1' and U2) and the characteristic information (V1', V2', S1', and S2') combined by the combination processing unit 104 are output.

The driving control device 2 receives, as an input, the presence probabilities Q1 and Q2 of the targets 1 and 2 and the position information and the characteristic information after the combination, and performs autonomous driving control of a vehicle. In this manner, it is possible to construct a portion of an autonomous driving system by combining the target detection device 1 and the driving control device 2.

FIG. 2 is a diagram illustrating a virtual image generation mechanism in the millimeter-wave radar. The millimeter-wave radar 10 uses a reception array configured by a plurality of reception antennas 200 in order to detect the angular direction θ of a target. A transmission signal of a specific frequency (wavelength λ) emitted from a transmission antenna (not illustrated) is reflected by a target and is received by the reception antenna 200. FIG. 2(a) illustrates a phase relation between reception signals in the respective reception antennas when a reception antenna interval d is small ($d < \lambda/2$). FIG. 2 (b) illustrates a phase relation between reception signals in the reception antennas when the reception antenna interval d is large ($d > \lambda/2$).

The case of (a) will be described. Reception signals $X_1$ to $X_8$ of the respective reception antennas 200 have a regular phase difference φ1 between adjacent antennas, in accordance with the angular direction θ1 of a target 201 to be detected. Conversely, the angular direction θ1 of the target 201 can be obtained from the regular phase difference φ1 between the reception signals $X_1$ to $X_8$. When the reception antenna interval d is shorter than the half wavelength λ/2, the regular phase difference φ1 does not exceed ±180 deg regardless of the angular direction θ1 of the target 201. Thus, a one-to-one relation is established between the phase difference φ1 and the angular direction θ1, and the virtual image of the target 201 is not generated.

However, in the radar for long distance applications, that uses a high frequency such as millimeter waves (for example, 76 GHz, wavelength $\lambda$ = about 4 mm), the antenna size is large in order to increase the antenna gain, and thus it is difficult to make the reception antenna distance d smaller than the half wavelength $\lambda/2$ (about 2 mm) .

FIG. 2(b) illustrates the case where the antenna interval d is larger than the half wavelength $\lambda/2$. When a target 202 is in a deep angular direction $\theta 2$, a regular phase difference $\varphi 2$ between the reception signals exceeds $\pm 180$ deg. Thus, it is not possible to distinguish the regular phase difference $\varphi 2$ from a phase difference $\varphi 3$ in a case of a shallow angular direction $\theta 3$. That is, a relation of $\varphi 2 = \varphi 3 \pm 180$deg is obtained. Therefore, the target 202 in the deep angular direction $\theta 2$ is erroneously detected as a target 203 in the shallow angular direction $\theta 3$. This phenomenon is called phase folding, and the target 203 in the shallow angular direction $\theta 3$ is detected as a virtual image of the target 202 at the deep angular direction $\theta 2$.

In the present embodiment, in the case of the millimeter-wave radar 10 for long distance applications, in order to suppress a virtual image generated due to phase folding, the target detection is corrected by combining the wide-angle sensor 20 that does not cause the phase folding.

FIG. 3 is a diagram illustrating comparison between detection characteristics between the millimeter-wave radar and the wide-angle sensor. FIG. 3(a) illustrates a field range of view and FIG. 3(b) illustrates angular-direction dependency of the gain. By combining the detection characteristics of the millimeter-wave radar and the wide-angle sensor in this relation, it is possible to suppress a virtual image generated due to phase folding.

In FIG. 3(a), the position of a vehicle equipped with the millimeter-wave radar and the wide-angle sensor is set to 300. If a field range of view 301 (solid line, field $\alpha 1$ of view) of the millimeter-wave radar 10 for a long distance is compared with a field range of view (broken line, field $\alpha 2$ of view) 302 of the wide-angle sensor 20, when the detection distance is larger, the field of view is smaller ($\alpha 1 < \alpha 2$). The reason for obtaining such a field range of view is, as described with reference to FIG. 2, that, when the radar is used for a long distance, the antenna size increases in order to increase the gain of the reception antenna, and the field of view is reduced as a result of increasing the antenna interval.

In FIG. 3(b), a gain 303 of the millimeter-wave radar 10 has a large main lobe of the gain in a narrow angular range, but the gain decreases with a side lobe as the angular direction $\theta$ increases. An occurrence boundary 304 of phase folding is set to an angular direction in which the phase difference between the adjacent antennas, which is determined by the antenna arrangement interval is 180 deg, and which is the same as a range of the main lobe of the gain 303 of the millimeter-wave radar.

On the other hand, a gain 305 of the wide-angle sensor 20 gradually decreases as the angular direction $\theta$ increases, and intersects with the gain 303 of the millimeter-wave radar. That is, in a range on the right side (range in which phase folding occurs) beyond the occurrence boundary 304 of phase folding in the millimeter-wave radar, the gain 305 of the wide-angle sensor is made larger than the gain 303 of the radar. Thus, when a virtual image can be seen due to phase folding in a millimeter-wave radar, a real image as the source of the virtual image can also be seen in a wide-angle sensor.

FIG. 3(a) illustrates the position of a target detected as an example. When reflection by the target to be detected is strong, a target 307 outside the main lobe is detected as a virtual image 306 in the field of view 301 of the millimeter-wave radar 10. At this time, the position of the target 307 is at a distant position in the field of view 302 of the wide-angle sensor 20, but the target 307 can also be detected by the wide-angle sensor 20 with the relation of the gain illustrated in FIG. 3(b). It is a precondition of the present embodiment that such a gain relation is established.

Here, as long as the wide-angle sensor 20 is a radar for a medium-range use for wide-angle applications, it is possible to realize a target detection device that is resistant to environmental changes without breaking the gain relation even in an environment such as darkness or rain.

The present embodiment is characterized by adding not only the position information of targets detected by the first and second sensors (millimeter-wave radar and wide-angle sensor) but also the information on the detection accuracy and using the information on the detection accuracy when pieces of data from the respective sensors are combined. Here, the detection accuracy is an index that reflects the intensity of a detection signal when the targets are detected by the respective sensors. Specifically, the detection accuracy is a numerical value obtained by using information such as an SNR, a size, and a distance of the detected target, and performing normalization between 0 and 100% in consideration of a difference in detection sensitivity between the sensors. By using the value of the detection accuracy obtained in this manner, it is possible to calculate the probability (presence probability) that the target is actually present at the position in consideration of the generation of the virtual image.

FIG. 4 is a diagram illustrating an example of calculating the presence probability of a target when a virtual image is generated, in the accuracy correction calculation unit 103. FIG. 4 quantitatively illustrates that, when the millimeter-wave radar for a long distance detects a virtual image of a target, the target detected by the millimeter-wave radar is the virtual image, by using the detection accuracies of the millimeter-wave radar and the wide-angle sensor and calculating the presence probability.

FIG. 4(a) illustrates the detection result by the millimeter-wave radar 10. It is assumed that a target 401 is detected in the field of view 301, and the detection accuracy P1 is 40%. However, it is assumed that the target 401 detected here is a virtual image of a target 402 detected by the wide-angle sensor 20 in FIG. 4(b).

FIG. 4(b) illustrates the detection result by the wide-angle sensor 20. It is assumed that the target 402 is detected outside the boundary 304, and the detection accuracy P2 is 70%. The target 402 is actual present, and corresponds to the target 401 (virtual image) detected by the millimeter-wave radar in FIG. 4(a).

Here, the reason that the detection accuracy P2 (= 70%) of the wide-angle sensor is higher than the detection accuracy P1 (= 40%) of the millimeter-wave radar is that the gain 305 of the wide-angle sensor is greater than the gain 303 of the millimeter-wave radar in a range in which phase folding occurs (outside the boundary 304) as in FIG. 3.

FIG. 4(c) illustrates the correspondence of whether or not the two detected targets 401 and 402 are identical to each other. First, the position U2 of the target 402 detected by the wide-angle sensor is transformed into the position F{U2} at which the target is predicted to be generated as a virtual image by the millimeter-wave radar, and the position after the transformation is indicated as the target 403. In the transformation of the position, processing of moving to a position that is line-symmetrical with respect to the occurrence boundary 304 of phase folding, that is, a position folded by the line of the occurrence boundary 304 is performed.

When the position F{U2} of the target 403 of the wide-angle sensor after the transformation is similar to the position U1 of the target 401 of the millimeter-wave radar, and the characteristic information such as the speed and the reflection cross-section area of the target 402 of the wide-angle sensor is similar to the characteristic information such as the speed and the reflection cross-section area of the target 401 of the millimeter-wave radar, it is determined that the target 402 of the wide-angle sensor is identical to the target 401 of the millimeter-wave radar. The determination is made by using not only the position information but also the characteristic information of the target such as the speed and the reflection cross-section area. The reason is as follows.

For example, there may be other targets near the position at which the virtual image is generated. In a method of determining whether or not the targets are identical to each other only by the positions of the targets corresponding to each other, there is a concern that the target that is actually present is erroneously determined to be a target by a virtual image. As a result of the erroneous determination, the target that is actually present is removed as the virtual image. For example, in the case of autonomous driving, the risk of collision with an obstacle that is actually present increases. In particular, in a situation where many targets are detected, the erroneous determination may occur frequently. Thus, the erroneous determination is reduced by setting a condition that the characteristic information is similar in addition to the position information. Although both the speed and the reflection cross-section area (target size) are taken up as characteristic information here, either one is also effective, and other type of characteristic information may be added.

From the above description, it can be determined that the target 401 detected by the millimeter-wave radar is identical to the target 402 detected by the wide-angle sensor, and it can be estimated that the target 401 of the millimeter-wave radar is a virtual image. In the present embodiment, further, whether or not the detected target is actually present at the detected position is quantitatively analyzed using the presence probability.

FIG. 4(d) illustrates the calculation result of the presence probability of the detected target. In the calculation, the presence probabilities Q1 and Q2 indicating whether or not each target is actually present are calculated by combining the detection accuracy P1 of the target 401 and the detection accuracy P2 of the target 402, and correcting the detection accuracy in consideration of the virtual image.

For the target 401 of the millimeter-wave radar, the detection accuracy P1 is 40%, but the probability that the target is a virtual image is considered to be 70% which is the detection accuracy P2 of the target 402 of the wide-angle sensor. That is, the probability that the target 401 is a virtual image is 40% × 70% = 28%. Conversely, the probability that the target 401 is not a virtual image (that is, the probability that the target 401 is a real image) is considered to be the remaining portion that is 100-70 = 30% of the detection accuracy 70% of the target 402, and the presence probability Q1 that the target 401 is actually present is 40% x 30% = 12%. FIG. 4(d) illustrates the presence probability Q1 (= 12%) of the target 404 after correction, which correspond to the detection accuracy P1 of the target 401.

On the other hand, the probability that the target 402 of the wide-angle sensor is not present is 30% because the detection accuracy P2 is 70%. Further, as described above, since the probability that the target 401 is present as a virtual image is 28%, the probability that the target 401 is not present as the virtual image is 72%. From the above description, the probability that the target 402 is not present is 30% × 72% = about 22%, and the presence probability Q2 is about 78%. FIG. 4(d) illustrates the presence probability Q2 (= 78%) of the target 405 after the correction, which corresponds to the detection accuracy P2 of the target 402.

A calculation expression used here is as follows. When the detection accuracy P1 of the target 401 by the millimeter-wave radar and the detection accuracy P2 of the target 402 by the wide-angle sensor are set, the presence probability Q1 of the target 401 considering the virtual image and the presence probability of the target 402 considering the virtual image Q2 is obtained by the following expressions.

$$Q1 = P1 \times (1-P2) \quad (1)$$

$$Q2 = 1- (1-P2) \times (1-P1 \cdot P2) \quad (2)$$

According to the calculation result in FIG. 4(d), the probability that the target 401 (404) detected by the millimeter-wave radar is a real image is low (Q1 = 12%), and the probability that the target 402 (405) detected by the wide-angle sensor is a real image is high (Q2 = 78%). The presence probabilities obtained by the calculation are transmitted to the driving control device 2, and then are compared to a threshold value (for example, 20%) provided separately. Thus, it is determined that there is a high possibility that the target 401 detected by the millimeter-wave radar is a virtual image, and control is performed with the target 401 removed.

As described above, the accuracy correction calculation unit 103 calculates the presence probability of targets by using the detection accuracy of the target detected by the millimeter-wave radar and the detection accuracy of the target detected by the wide-angle sensor, and thus performs a correction so that the presence probability of the target having a possibility that the target is a virtual image is decreased, and the presence probability of the target (real image) being the source for generating a virtual image increases in accordance with the detection accuracy of the virtual image. This makes it possible to quantitatively determine whether or not the target is actually present, improve the reliability of the determination as compared with the related art, and prevent the erroneous detection of the target due to the generation of a virtual image.

FIG. 5 is a diagram illustrating an example of calculating the presence probability when the position of a virtual image overlaps another target. Here, when another target is actually present at the position where a virtual image is generated, the presence probability indicates that the target detected by the millimeter-wave radar is a real image.

FIG. 5(a) illustrates the detection result by the millimeter-wave radar 10. It is assumed that a target 501 is detected, and the detection accuracy P1 is 90%. However, it is assumed that the target 501 detected here indicates that the virtual image of a target 502 detected by the wide-angle sensor 20 in FIG. 5(b) overlaps another target (real image) at the same position. In addition, the reason that the detection accuracy P1 (= 90%) of the target 501 is higher than the detection accuracy P1 (= 40%) of the target 401 in FIG. 4(a) is that a signal level increases by the overlap between the virtual image and the other target (real image).

FIG. 5(b) illustrates the detection result by the wide-angle sensor 20. It is assumed that the target (502) that is actually present is detected outside the boundary 304, and the detection accuracy P2 is 70%. A target corresponding to a real image portion of the target 501 in FIG. 5(a) is not detected inside the boundary 304. This is because, as described in FIG. 3, the gain of the wide-angle sensor 20 is smaller than the gain of the millimeter-wave radar 10 inside the boundary 304.

FIG. 5(c) illustrates the resultant obtained by transforming the position of the target 502 detected by the wide-angle sensor into the position at which the target is predicted to be generated as a virtual image by the millimeter-wave radar, and the position after the transformation is indicated as the target 503. Here, similar to the description made with reference to FIG. 4, it is assumed that the target 501 of the millimeter-wave radar and the target 503 of the wide-angle sensor after the transformation are determined to be identical to each other.

FIG. 5(d) illustrates the calculation result of the presence probability of the detected target. The calculation in this case can be performed by using the expressions (1) and (2) as in the description made with reference to FIG. 4, and the description in the middle will be omitted.

The presence probability of the target 504 after correction considering the virtual image, which corresponds to the target 501 detected by the millimeter-wave radar is Q1 = 27%. On the other hand, the presence probability of the target 505 after correction considering the virtual image, which corresponds to the target 502 detected by the wide-angle sensor is Q2 = 92%. According to such calculation results, the probability Q1 = 27% that the target 501 (504) detected by the millimeter-wave radar is a real image is higher than the probability Q1 = 12% of the target 401 (404) in FIG. 4. In the driving control device 2, it is determined that there is a high possibility that the target 501 is a target that is actually present, by comparing the probability with the threshold value (for example, 20%) provided separately, and the control is performed with the target 501 left.

That is, it is possible to prevent an occurrence of a situation in which a target that is actually present is not detected, by leaving the target having a presence probability that is equal to or greater than a predetermined value when the virtual image and the target that is actually present overlap each other. As a result, it is possible to avoid the risk of collision with an obstacle by completely removing the target as in the related art.

The driving control device 2 connected to the target detection device 1 determines the setting of the threshold value of the presence probability. The driving control device 2 sets an optimum threshold value in advance in accordance with applications such as driver assist applications and fully autonomous driving applications, and the driving conditions of the vehicle at that time.

FIG. 6 is a flowchart illustrating the entirety of analysis processing of a target by the target analysis unit 30. The analysis processing includes the calculation of the presence probability described with reference to FIGS. 4 and 5. The processing contents of each step will be described.

S601: Input information on the target 1 detected by the millimeter-wave radar 10. The information includes the three-dimensional position U1 (x1, y1, z1), the speed V1, the area S1, and the detection accuracy P1 of the target 1. Then, the information is transferred to S606 and S610.

S602: Input information on the target 2 detected by the wide-angle sensor 20 at substantially the same timing as S601. The information includes the three-dimensional position U2 (x2, y2, z2), the speed V2, the area S2, and the detection accuracy P2 of the target 2.

S603: Obtain the angular direction θ of the target 2 output from the wide-angle sensor 20 from the position information (x2, y2) (calculation expression θ2 = atan(y2/x2)).

S604: Determine whether or not the angular direction θ2 of the target 2 obtained in S603 is a direction in which a virtual image is generated due to phase folding in the millimeter-wave radar 10. That is, it is determined whether or not to satisfy θ2> Th0 (occurrence boundary). When the determination result is Yes (when the virtual image is generated), the process proceeds to S605. When the determination result is No (when no virtual image is generated), the process proceeds to S610.

S605: The virtual image transformation unit 101 performs coordinate transformation for a position at which the virtual image is generated due to the folding of the target 2, and also performs transformation on the speed and the area in consideration of the folding. Data after the transformation to a virtual image is represented by the symbol F{_}.

S606: The identical target determination unit 102 performs a calculating for determining whether or not the target 2 detected by the wide-angle sensor after virtual image transformation is identical to the target 1 detected by the millimeter-wave radar. In the calculation, a position error ΔU, a speed error ΔV, and an area error ΔS are calculated.

S607: Determine whether or not all the position error ΔU, the speed error ΔV, and the area error ΔS which are calculated are smaller than threshold values Th1, Th2, and Th3 set in advance. When the determination result is Yes, it is determined that the virtual image of the target 2 is identical to the target 1, Then, the process proceeds to S608. When the determination result is No, it is determined that the target 1 is not identical to the target 2, and then the process proceeds to S609. In this determination, it is also possible to quantify how accurately the targets can be determined to be identical to each other, depending on how much margin (difference from the threshold value) is provided for the threshold values Th1, Th2, and Th3 set in advance.

S608: When it is determined in S607 that the targets are identical to each other, perform combination calculation of target information on the premise that the target 1 detected by the millimeter-wave radar is a virtual image. First, the accuracy correction calculation unit 103 calculates the presence probabilities Q1 and Q2 of the respective targets by using the detection accuracy P1 of the target 1 detected by the millimeter-wave radar and the detection accuracy P2 of the target 2 detected by the wide-angle sensor. In the calculation, the above expressions (1) and (2) are used.

The combination processing unit 104 combines the target information (position U1, speed V1, and area S1) of the target 1 and the target information U2, V2, and S2 of the virtual image of the target 2 by weighting average or the like. Each piece of the target information after the combination is indicated by adding a dash symbol in FIG. 6. Thus, it is possible to improve the detection accuracy of the target information. The pieces of target information of the target 1 and the target 2 subjected to the above processing are transferred to S613.

S609: When it is determined in S607 that the targets are not identical to each other, the pieces of information on the target 1 and target 2 are transferred to S613 without performing particular processing. That is, the detection accuracies P1 and P2 themselves become the presence probabilities Q1 and Q2.

S610: When the determination in S604 is No (when no virtual image is generated), the identical target determination unit 102 performs a calculation for determining whether or not the target 2 of the wide-angle sensor is identical to the target 1 of the millimeter-wave radar, without performing virtual image transformation. In the calculation, similar to S606, the position error ΔU, the speed error ΔV, and the area error ΔS are calculated.

S611: Similar to S607, determine whether or not all the position error ΔU, the speed error ΔV, and the area error ΔS are smaller than threshold values Th1, Th2, and Th3. When the determination result is Yes, it is determined that the virtual image of the target 2 is identical to the target 1, Then, the process proceeds to S612. When the determination result is No, it is determined that the target 1 is not identical to the target 2. Then, the process proceeds to S609.

S612: When it is determined in S611 that the targets are identical to each other, perform combination calculation of the target information. First, the accuracy correction calculation unit 103 corrects the detection accuracy of the target information to obtain the presence probability. From the probability (1-P1) that the target 1 of the millimeter-wave radar is not present and the probability (1-P2) that the target 2 of the wide-angle sensor is not present, the probability that both the sensors erroneously detect the presence is (1-P1) × (1-P2). From this, the presence probability Q is as follows:

$$Q = 1- (1-P1) \times (1-P2) \quad (3)$$

In addition, the value is used as the presence probability of the target information after the correction. With this correction, the accuracy of the presence probability is improved.

In addition, the combination processing unit 104 combines the pieces of target information (position, speed, and area) of the target 1 and the target 2. At this time, the reliability of the detection information is improved by performing weighting averaging or the like based on the detection accuracies P1 and P2 of the target 1 and the target 2. The target information (position U', speed V', and area S') after the combination is transferred to S613 together with the presence probability Q.

S613: The driving control device 2 determines how to control the vehicle in a state where the driving control device finally determines the presence state of a target based on the target information (position, speed, and area) and the presence probabilities Q (Q1 and Q2) that are transmitted from the target detection device 1, while comparing the transmitted target information with the target information previously detected.

The control by the driving control device 2 is performed as follows, for example, by setting the threshold value of the presence probability Q of the target to 20%. When a target is detected at a position far away in a traveling direction with a presence probability Q = 30%, tracking of the target is started while starting deceleration. Alternatively, if a target is detected at a short distance but the presence probability Q is as low as 10%, and it is not possible to be associated with the previous tracking target, only the tracking is started on the premise that the target is not actually present. Then, when the probability Q rises to 90% in the next frame after the tracking starts, it is determined to be in a situation in which the brake is applied, and the vehicle is controlled. Since the threshold value of the presence probability for performing such determination and control differs depending on the applications such as the driver assist applications and the fully autonomous driving applications, the threshold value is appropriately set in advance in accordance with the application.

As described above, according to the target detection device in the present embodiment, an erroneous detection of a virtual image due to phase folding to be a target that is actually present is prevented, and, even when the virtual image overlaps the position of another target that is actually present, overlooking the target that is actually present does not occur. This makes it possible to provide a target detection device having high reliability.

Reference Signs List

| | |
|---|---|
| 1 | target detection device |
| 2 | driving control device |
| 10 | millimeter-wave radar (first sensor) |
| 20 | wide-angle sensor (second sensor) |
| 30 | target analysis unit |
| 101 | virtual image transformation unit |
| 102 | identical target determination unit |
| 103 | accuracy correction calculation unit |
| 104 | combination processing unit |
| 105 | false image inverse transformation unit |
| 200 | reception antenna |
| 301 | field range of view of millimeter-wave radar |
| 302 | field range of view of wide-angle sensor |
| 303 | gain of millimeter-wave radar |
| 304 | occurrence boundary of phase folding |
| 305 | gain of wide-angle sensor |
| 401 to 405, 501 to 505 | target |
| P1, P2 | detection accuracy |
| Q1, Q2 | presence probability |

**Claims**

**1.** A target detection device (1) for determining that a first target is a virtual image of a second target, the target detection device comprising:

a first sensor (10) which is a long-range radar that detects a target in a first field of view ($\alpha 1$);
a second sensor (20) that detects a target in a second field of view ($\alpha 2$) that is larger than the first field of view ($\alpha 1$), wherein the first field of view ($\alpha 1$) is arranged within the second field of view ($\alpha 2$); and
a target analysis unit (30) that receives, as an input, detection information on a first target detected by the first sensor (10) and detection information on a second target detected by the second sensor (20), and outputs a presence probability that the first target is actually present,
wherein the respective detection information includes a position (U1, U2) and characteristic information (V1, S1, V2, S2) of the respective target, and a detection accuracy indicating how accurately the respective target has been detected using an index indicative of the intensity of a detection signal when the respective target is detected by the respective sensor,

wherein the target analysis unit (30) includes:

an identical target determination unit (102) that determines whether or not the first target is identical to the second target by comparing a position (U1) and characteristic information (S1, V1) of the first target with a position (U2, F{U2}) and characteristic information (S2, V2) of the second target;
a virtual image transformation unit (101) that transforms the position (U2) of the second target into a position (F{U2}) at which a virtual image is generated within the first field of view ($\alpha$1), when the second target is detected outside the first field of view ($\alpha$1), wherein the identical target determination unit (102) compares the position (U1) of the first target with the position (F{U2}) of the second target obtained by transformation of the virtual image transformation unit (101); and
an accuracy correction calculation unit (103) that calculates the presence probability of the first target;
wherein the identical target determination unit (102) determines that the first target is identical to the second target when the position (U1) of the first target overlaps the position (U2, F{U2}) of the second target and when the characteristic information (S1, V1) of the first target coincides with the characteristic information (S2, V2) of the second target to within predetermined error values, respectively,
wherein the first target is estimated to be a virtual image of the second target when the identical target determination unit (102) determines that the first target is identical to the second target, and
wherein:

(i) when the first target is estimated to be a virtual image of the second target, the accuracy correction calculation unit (103) calculates the presence probability of the first target using the expression Q1 = P1 $\times$ (1-P2), where the presence probability of the first target is Q1 and the detection accuracies of the first target and the second target are respectively P1 and P2; and
(ii) when the identical target determination unit (102) determines that the first target is not identical to the second target, the accuracy correction calculation unit (103) outputs the detection accuracy (P1) of the first target as the presence probability (Q1) that the first target is actually present.

**2.** The target detection device (1) according to claim 1, wherein a gain of the second sensor (20) is greater than a gain of the first sensor (10) in a range outside the first field of view ($\alpha$1).

**3.** The target detection device (1) according to claim 2, wherein the second sensor (20) is a medium-range radar.

**4.** The target detection device (1) according to claim 1, wherein the characteristic information includes at least one of a speed (V1, V2) and an area (S1, S2) of the target.

**5.** The target detection device (1) according to claim 1, wherein, when, as a result of the determination of the identical target determination unit (102), the first target is estimated not to be the virtual image of the second target, the accuracy correction calculation unit (103) outputs the detection accuracy (P2) of the second target as a presence probability (Q2) that the second target is actually present.

**6.** The target detection device (1) according to claim 1, wherein, when the first target is estimated to be the virtual image of the second target, and the detection accuracies of the first target and the second target are respectively P1 and P2, the accuracy correction calculation unit (103) calculates the presence probability Q2 of the second target by the following expression.

$$Q2 = 1-(1-P2) \times (1-P1 \cdot P2)$$

**7.** A target detection method for determining that a first target is a virtual image of a second target, the method comprising:

a step of detecting a target by a first sensor (10) which is a long-range radar having a first field of view ($\alpha$1);
a step of detecting a target by a second sensor (20) having a second field of view ($\alpha$2), that is larger than the first field of view ($\alpha$1), wherein the first field of view ($\alpha$1) is arranged within the second field of view ($\alpha$2); and
a target analysis step of outputting a presence probability that a first target is actually present, from detection information on the first target detected by the first sensor (10) and detection information on a second target detected by the second sensor (20),
wherein the respective detection information includes a position (U1, U2) and characteristic information (V1, S1, V2, S2) of the respective target, and a detection accuracy (P1, P2) indicating how accurately the respective target has been detected using an index indicative of the intensity of a detection signal when the respective target is detected by the respective sensor,
wherein the target analysis step includes:

a determination step of determining whether or not the first target is identical to the second target by comparing a position (U1) and characteristic information (S1, V1) of the first target with a position (U2, F{U2}) and characteristic information (S2, V2) of the second target;
a transformation step of transforming the position (U2) of the second target into a position (F{U2}) at which a virtual image is generated within the first field of view ($\alpha$1), when the second target is detected outside the first field of view ($\alpha$1), wherein in the determination step the position (U1) of the first target is compared with the position (F{U2}) of the second target obtained by transformation in the transformation step;
and
a calculation step of calculating the presence probability of the first target,
wherein it is determined that the first target is identical to the second target when the position (U1) of the first target overlaps the position (U2, F{U2}) of the second target and when the characteristic information (S1, V1) of the first target coincides with the characteristic information (S2, V2) of the second target to within predetermined error values, respectively,
wherein the first target is estimated to be a virtual image of the second target when it is determined in the determining step that the first target is identical to the second target, and
wherein:

(i) when the first target is estimated to be a virtual image of the second target, the presence probability of the first target is calculated using the expression $Q1 = P1 \times (1-P2)$ where the presence probability of the first target is Q1 and the detection accuracies of the first target and the second target are respectively P1 and P2; and
(ii) when an identical target determination unit (102) determines that the first target is not identical to the second target, the accuracy correction calculation unit (103) outputs the detection accuracy (P1) of the first target as the presence probability (Q1) that the first target is actually present.

## Patentansprüche

1. Zieldetektionsvorrichtung (1) zum Bestimmen, dass ein erstes Ziel ein virtuelles Bild eines zweiten Ziels ist, wobei die Zieldetektionsvorrichtung Folgendes umfasst:

einen ersten Sensor (10), der ein Langstreckenradar ist, das ein Ziel in einem ersten Sichtfeld ($\alpha$1) detektiert;
einen zweiten Sensor (20), der ein Ziel in einem zweiten Sichtfeld ($\alpha$2) detektiert, das größer ist als das erste Sichtfeld ($\alpha$1), wobei das erste Sichtfeld ($\alpha$1) innerhalb des zweiten Sichtfelds ($\alpha$2) angeordnet ist; und
eine Zielanalyseeinheit (30), die als Eingabe Detektionsinformationen zu einem ersten Ziel, das durch den ersten Sensor (10) detektiert wurde, und Detektionsinformationen zu einem zweiten Ziel, das durch den zweiten Sensor (20) detektiert wurde, empfängt und eine Präsenzwahrscheinlichkeit ausgibt, dass das erste Ziel tatsächlich präsent ist,
wobei die jeweiligen Detektionsinformationen eine Position (U1, U2) und Merkmalsinformationen (V1, S1, V2, S2) des jeweiligen Ziels umfassen und eine Detektionsgenauigkeit, die unter Verwendung eines Index, der die Intensität eines Detektionssignals angibt, wenn das jeweilige Ziel von dem jeweiligen Sensor detektiert wird, angibt, wie genau, das jeweilige Ziel detektiert wurde,
wobei die Zielanalyseeinheit (30) Folgendes umfasst:

eine Bestimmungseinheit (102) für identische Ziele, die bestimmt, ob das erste Ziel identisch mit dem zweiten Ziel ist oder nicht, indem eine Position (U1) und Merkmalsinformationen (S1, V1) des ersten Ziels mit einer Position (U2, F{U2}) und Merkmalsinformationen (S2, V2) des zweiten Ziels verglichen werden;
eine Virtuelles-Bild-Transformationseinheit (101), die die Position (U2) des zweiten Ziels in eine Position (F {U2}) transformiert, an der ein virtuelles Bild innerhalb des ersten Sichtfelds ($\alpha$1) erzeugt wird, wenn das zweite Ziel außerhalb des ersten Sichtfelds ($\alpha$1) detektiert wurde, wobei die Bestimmungseinheit (102) für identische Ziele die Position (U1) des ersten Ziels mit der Position (F{U2}) des zweiten Ziels, die durch die Transformation der Virtuelles-Bild-Transformationseinheit (101) erhalten wurde, vergleicht; und
eine Genauigkeitskorrektur-Berechnungseinheit (103), die die Präsenzwahrscheinlichkeit des ersten Ziels berechnet;
wobei die Bestimmungseinheit (102) für identische Ziele bestimmt, dass das erste Ziel mit dem zweiten Ziel identisch ist, wenn die Position (U1) des ersten Ziels die Position (U2, F{U2}) des zweiten Ziels überlagert bzw. wenn die Merkmalsinformationen (S1, V1) des ersten Ziels mit den Merkmalsinformationen (S2, V2) des zweiten Ziels auf innerhalb vorbestimmter Fehlerwerte zusammenfallen,
wobei das erste Ziel als virtuelles Bild des zweiten Ziels geschätzt wird, wenn die Bestimmungseinheit (102) für identische Ziele bestimmt, dass das erste Ziel mit dem zweiten Ziel identisch ist, und
wobei:

(i) wenn das erste Ziel als virtuelles Bild des zweiten Ziels geschätzt wird, die Genauigkeitskorrektur-Berechnungseinheit (103) die Präsenzwahrscheinlichkeit des ersten Ziels unter Verwendung des Ausdrucks Q1 = P1 x (1 - P2) berechnet, wobei die Präsenzwahrscheinlichkeit des ersten Ziels Q1 ist und die Detektionsgenauigkeiten des ersten Ziels bzw. des zweiten Ziels P1 bzw. P2 sind; und
(ii) wenn die Bestimmungseinheit (102) für identische Ziele bestimmt, dass das erste Ziel nicht mit dem zweiten Ziel identisch ist, die Genauigkeitskorrektur-Berechnungseinheit (103) die Detektionsgenauigkeit (P1) des ersten Ziels als die Präsenzwahrscheinlichkeit (Q1), dass das erste Ziel tatsächlich präsent ist, ausgibt.

**2.** Zieldetektionsvorrichtung (1) nach Anspruch 1, wobei eine Verstärkung des zweiten Sensors (20) in einer Reichweite außerhalb des ersten Sichtfelds ($\alpha 1$) größer ist als eine Verstärkung des ersten Sensors (10).

**3.** Zieldetektionsvorrichtung (1) nach Anspruch 2, wobei der zweite Sensor (20) ein Mittelstreckenradar ist.

**4.** Zieldetektionsvorrichtung (1) nach Anspruch 1, wobei die Merkmalsinformationen zumindest eines aus einer Geschwindigkeit (V1, V2) und einem Bereich (S1, S2) des Ziels umfassen.

**5.** Zieldetektionsvorrichtung (1) nach Anspruch 1, wobei, wenn als Ergebnis der Bestimmung der Bestimmungseinheit (102) für identische Ziele das erste Ziel nicht als das virtuelle Bild des zweiten Ziels geschätzt wird, die Genauigkeitskorrektur-Berechnungseinheit (103) die Detektionsgenauigkeit (P2) des zweiten Ziels als Präsenzwahrscheinlichkeit (Q2), dass das zweite Ziel tatsächlich präsent ist, ausgibt.

**6.** Zieldetektionsvorrichtung (1) nach Anspruch 1, wobei, wenn das erste Ziel als das virtuelle Bild des zweiten Ziels geschätzt wird, und die Detektionsgenauigkeiten des ersten Ziels und des zweiten Ziels P1 bzw. P2 sind, die Genauigkeitskorrektur-Berechnungseinheit (103) die Präsenzwahrscheinlichkeit Q2 des zweiten Ziels durch den folgenden Ausdruck berechnet:

$$Q2 = 1 - (1 - P2) \times (1 - P1 \cdot P2)$$

**7.** Zieldetektionsverfahren zum Bestimmen, dass ein erstes Ziel ein virtuelles Bild eines zweiten Ziels ist, wobei das Verfahren Folgendes umfasst:

einen Schritt des Detektierens eines Ziels durch einen ersten Sensor (10), der ein Langstreckenradar ist, der ein erstes Sichtfeld ($\alpha 1$) aufweist;
einen Schritt des Detektierens eines Ziels durch einen zweiten Sensor (20), der ein zweites Sichtfeld ($\alpha 2$) aufweist, das größer ist als das erste Sichtfeld ($\alpha 1$), wobei das erste Sichtfeld ($\alpha 1$) innerhalb des zweiten Sichtfelds ($\alpha 2$) angeordnet ist; und
einen Zielanalyseschritt des Ausgebens einer Präsenzwahrscheinlichkeit, dass ein erstes Ziel tatsächlich präsent ist, ausgehend von Detektionsinformationen zu dem ersten Ziel, das durch den ersten Sensor (10) detektiert wurde, und von Detektionsinformationen zu einem zweiten Ziel, das durch den zweiten Sensor (20) detektiert wurde,
wobei die jeweiligen Detektionsinformationen eine Position (U1, U2) und Merkmalsinformationen (V1, S1, V2, S2) des jeweiligen Ziels umfassen und eine Detektionsgenauigkeit (P1, P2), die unter Verwendung eines Index, der die Intensität eines Detektionssignals angibt, wenn das jeweilige Ziel von dem jeweiligen Sensor detektiert wird, angibt, wie genau, das jeweilige Ziel detektiert wurde,
wobei der Zielanalyseschritt Folgendes umfasst:

einen Bestimmungsschritt des Bestimmens, ob das erste Ziel identisch mit dem zweiten Ziel ist oder nicht, indem eine Position (U1) und Merkmalsinformationen (S1, V1) des ersten Ziels mit einer Position (U2, F{U2}) und Merkmalsinformationen (S2, V2) des zweiten Ziels verglichen werden;
einen Transformationsschritt des Transformierens der Position (U2) des zweiten Ziels in eine Position (F {U2}), an der ein virtuelles Bild innerhalb des ersten Sichtfelds ($\alpha1$) erzeugt wird, wenn das zweite Ziel außerhalb des ersten Sichtfelds ($\alpha1$) detektiert wurde, wobei in dem Bestimmungsschritt die Position (U1) des ersten Ziels mit der Position (F{U2}) des zweiten Ziels, die durch die Transformation im Transformationsschritt erhalten wurde, verglichen wird; und
einen Berechnungsschritt des Berechnens der Präsenzwahrscheinlichkeit des ersten Ziels,
wobei bestimmt wird, dass das erste Ziel mit dem zweiten Ziel identisch ist, wenn die Position (U1) des ersten Ziels die Position (U2, F{U2}) des zweiten Ziels überlagert bzw. wenn die Merkmalsinformationen (S1, V1) des ersten Ziels mit den Merkmalsinformationen (S2, V2) des zweiten Ziels auf innerhalb vorbestimmter Fehlerwerte zusammenfallen,
wobei das erste Ziel als virtuelles Bild des zweiten Ziels geschätzt wird, wenn in dem Bestimmungsschritt bestimmt wird, dass das erste Ziel mit dem zweiten Ziel identisch ist, und
wobei:

(i) wenn das erste Ziel als virtuelles Bild des zweiten Ziels geschätzt wird, die Präsenzwahrscheinlichkeit des ersten Ziels unter Verwendung des Ausdrucks $Q1 = P1 \times (1 - P2)$ berechnet wird, wobei die Präsenzwahrscheinlichkeit des ersten Ziels Q1 ist und die Detektionsgenauigkeiten des ersten Ziels bzw. des zweiten Ziels P1 bzw. P2 sind; und
(ii) wenn eine Bestimmungseinheit (102) für identische Ziele bestimmt, dass das erste Ziel nicht mit dem zweiten Ziel identisch ist, die Genauigkeitskorrektur-Berechnungseinheit (103) die Detektionsgenauigkeit (P1) des ersten Ziels als die Präsenzwahrscheinlichkeit (Q1), dass das erste Ziel tatsächlich präsent ist, ausgibt.

**Revendications**

**1.** Dispositif de détection de cible (1) permettant de déterminer qu'une première cible est une image virtuelle d'une deuxième cible, le dispositif de détection de cible comprenant :

un premier capteur (10) qui est un radar à longue portée qui détecte une cible dans un premier champ de vision ($\alpha1$) ;
un deuxième capteur (20) qui détecte une cible dans un deuxième champ de vision ($\alpha2$) qui est plus grand que le premier champ de vision ($\alpha1$), dans lequel le premier champ de vision ($\alpha1$) est agencé dans le deuxième champ de vision ($\alpha2$) ; et
une unité d'analyse de cible (30) qui reçoit, en entrée, des informations de détection sur une première cible détectée par le premier capteur (10) et des informations de détection sur une deuxième cible détectée par le deuxième capteur (20), et qui fournit en sortie une probabilité de présence selon laquelle la première cible est réellement présente,
dans lequel les informations de détection respectives incluent une position (U1, U2) et des informations caractéristiques (V1, S1, V2, S2) de la cible respective, et une précision de détection indiquant le degré de précision avec lequel la cible respective a été détectée, à l'aide d'un indice indiquant l'intensité d'un signal de détection lorsque la cible respective est détectée par le capteur respectif,
dans lequel l'unité d'analyse de cible (30) inclut :

une unité de détermination de cible identique (102) qui détermine si la première cible est identique à la deuxième cible ou non, en comparant une position (U1) et des informations caractéristiques (S1, V1) de la première cible à une position (U2, F{U2}) et à des informations caractéristiques (S2, V2) de la deuxième cible ;
une unité de transformation d'image virtuelle (101) qui transforme la position (U2) de la deuxième cible en une position (F{U2}) à laquelle une image virtuelle est générée dans le premier champ de vision ($\alpha1$), lorsque la deuxième cible est détectée en dehors du premier champ de vision ($\alpha1$), dans laquelle l'unité de détermination de cible identique (102) compare la position (U1) de la première cible à la position (F{U2}) de la deuxième cible obtenue par la transformation de l'unité de transformation d'image virtuelle (101) ; et
une unité de calcul de correction de précision (103) qui calcule la probabilité de présence de la première cible ;
dans lequel l'unité de détermination de cible identique (102) détermine que la première cible est identique à la deuxième cible lorsque la position (U1) de la première cible chevauche la position (U2, F{U2}) de la deuxième cible, et lorsque les informations caractéristiques (S1, V1) de la première cible coïncident avec les informations caractéristiques (S2, V2) de la deuxième cible à des valeurs d'erreur prédéterminées, respectivement,
dans lequel la première cible est estimée comme étant une image virtuelle de la deuxième cible lorsque l'unité de détermination de cible identique (102) détermine que la première cible est identique à la deuxième cible, et
dans lequel :

(i) lorsque la première cible est estimée comme étant une image virtuelle de la deuxième cible, l'unité de calcul de correction de précision (103) calcule la probabilité de présence de la première cible à l'aide de l'expression Q1 = P1 x (1-P2), où la probabilité de présence de la première cible est Q1 et les précisions de détection de la première cible et de la deuxième cible sont respectivement P1 et P2 ; et
(ii) lorsque l'unité de détermination de cible identique (102) détermine que la première cible n'est pas identique à la deuxième cible, l'unité de calcul de correction de précision (103) fournit en sortie la précision de détection (P1) de la première cible en tant que la probabilité de présence (Q1) de la première cible.

**2.** Dispositif de détection de cible (1) selon la revendication 1, dans lequel un gain du deuxième capteur (20) est supérieur à un gain du premier capteur (10) dans une plage située en dehors du premier champ de vision ($\alpha$1).

**3.** Dispositif de détection de cible (1) selon la revendication 2, dans lequel le deuxième capteur (20) est un radar à moyenne portée.

**4.** Dispositif de détection de cible (1) selon la revendication 1, dans lequel les informations caractéristiques incluent au moins l'une parmi une vitesse (V1, V2) et une zone (S1, S2) de la cible.

**5.** Dispositif de détection de cible (1) selon la revendication 1, dans lequel, lorsque, à la suite de la détermination de l'unité de détermination de cible identique (102), la première cible est estimée comme n'étant pas l'image virtuelle de la deuxième cible, l'unité de calcul de correction de précision (103) fournit en sortie la précision de détection (P2) de la deuxième cible en tant qu'une probabilité de présence (Q2) selon laquelle la deuxième cible est réellement présente.

**6.** Dispositif de détection de cible (1) selon la revendication 1, dans lequel, lorsque la première cible est estimée comme étant l'image virtuelle de la deuxième cible, et que les précisions de détection de la première cible et de la deuxième cible sont respectivement Pl et P2, l'unité de calcul de correction de précision (103) calcule la probabilité de présence Q2 de la deuxième cible à l'aide de l'expression suivante :

$$Q2 = 1-(1-P2) \times (1-P1-P2).$$

**7.** Procédé de détection de cible permettant de déterminer qu'une première cible est une image virtuelle d'une deuxième cible, le procédé comprenant :

une étape consistant à détecter une cible par le biais d'un premier capteur (10) qui est un radar à longue portée ayant un premier champ de vision ($\alpha$1) ;
une étape consistant à détecter une cible par le biais d'un deuxième capteur (20) ayant un deuxième champ de vision ($\alpha$2), qui est plus grand que le premier champ de vision ($\alpha$1), dans lequel le premier champ de vision ($\alpha$1) est agencé dans le deuxième champ de vision ($\alpha$2) ; et
une étape d'analyse de cible consistant à fournir en sortie une probabilité de présence selon laquelle une première cible est réellement présente, à partir d'informations de détection sur la première cible détectée par le premier capteur (10) et d'informations de détection sur une deuxième cible détectée par le deuxième capteur (20),
dans lequel les informations de détection respectives incluent une position (U1, U2) et des informations caractéristiques (V1, S1, V2, S2) de la cible respective, et une précision de détection (P1, P2) indiquant le degré de précision avec lequel la cible respective a été détectée, à l'aide d'un indice indiquant l'intensité d'un signal de détection lorsque la cible respective est détectée par le capteur respectif,
dans lequel l'étape d'analyse de cible inclut :

une étape de détermination consistant à déterminer si la première cible est identique à la deuxième cible ou non, en comparant une position (U1) et des informations caractéristiques (S1, V1) de la première cible à une position (U2, F{U2}) et à des informations caractéristiques (S2, V2) de la deuxième cible ;
une étape de transformation consistant à transformer la position (U2) de la deuxième cible en une position (F {U2}) à laquelle une image virtuelle est générée dans le premier champ de vision ($\alpha$1), lorsque la deuxième cible est détectée en dehors du premier champ de vision ($\alpha$1), dans lequel, à l'étape de détermination, la position (U1) de la première cible est comparée à la position (F{U2}) de la deuxième cible obtenue à l'étape de transformation ; et
une étape de calcul consistant à calculer la probabilité de présence de la première cible,
dans lequel il est déterminé que la première cible est identique à la deuxième cible lorsque la position (U1) de la première cible chevauche la position (U2, F{U2}) de la deuxième cible, et lorsque les informations caractéristiques (S1, V1) de la première cible coïncident avec les informations caractéristiques (S2, V2) de la deuxième cible à des valeurs d'erreur prédéterminées, respectivement,
dans lequel la première cible est estimée comme étant une image virtuelle de la deuxième cible lorsqu'il est déterminé, à l'étape de détermination, que la première cible est identique à la deuxième cible, et
dans lequel :

(i) lorsque la première cible est estimée comme étant une image virtuelle de la deuxième cible, la probabilité de présence de la première cible est calculée à l'aide de l'expression Q1 = P1 x (1-P2), où la probabilité de présence de la première cible est Q1 et les précisions de détection de la première cible et de la deuxième cible sont respectivement P1 et P2 ; et
(ii) lorsqu'une unité de détermination de cible identique (102) détermine que la première cible n'est pas identique à la deuxième cible, l'unité de calcul de correction de précision (103) fournit en sortie la précision de détection (P1) de la première cible en tant que la probabilité de présence (Q1) selon laquelle la première cible est réellement présente.

# FIG. 1

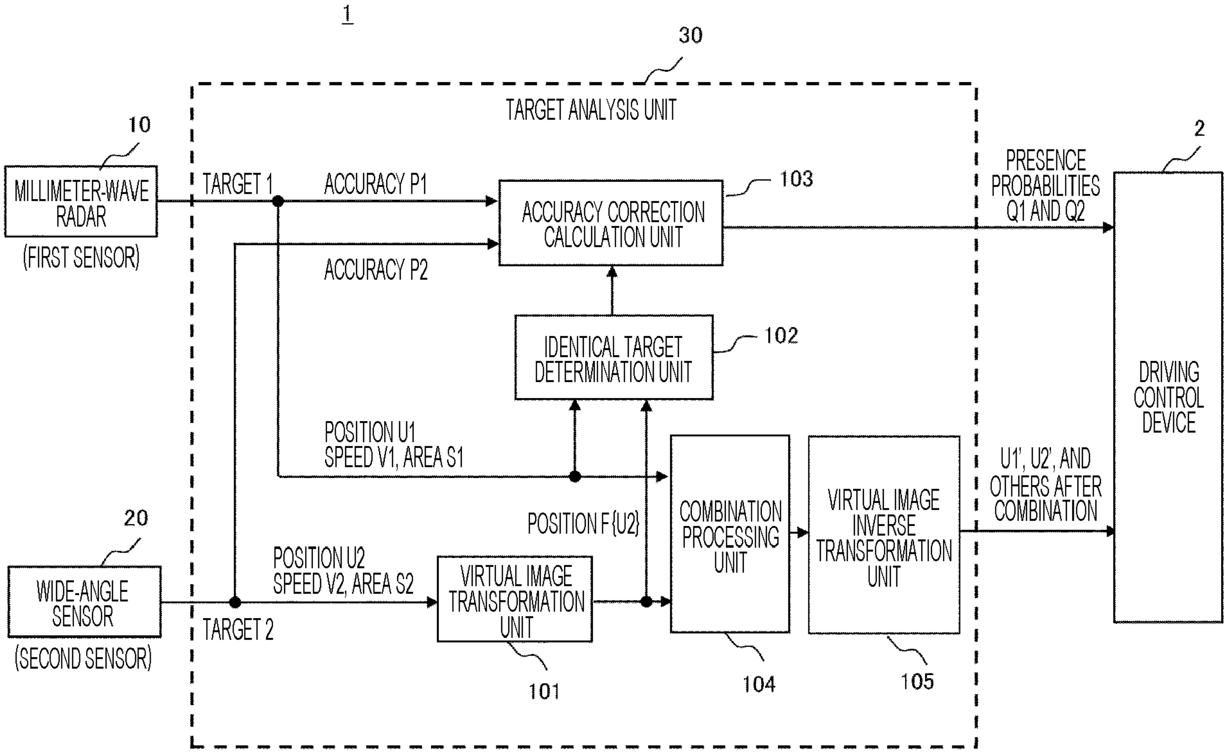
1
30
TARGET ANALYSIS UNIT
10
MILLIMETER-WAVE RADAR
(FIRST SENSOR)
TARGET 1
ACCURACY P1
ACCURACY P2
ACCURACY CORRECTION CALCULATION UNIT
103
PRESENCE PROBABILITIES Q1 AND Q2
2
DRIVING CONTROL DEVICE
IDENTICAL TARGET DETERMINATION UNIT
102
POSITION U1
SPEED V1, AREA S1
POSITION F{U2}
COMBINATION PROCESSING UNIT
VIRTUAL IMAGE INVERSE TRANSFORMATION UNIT
U1', U2', AND OTHERS AFTER COMBINATION
20
WIDE-ANGLE SENSOR
(SECOND SENSOR)
TARGET 2
POSITION U2
SPEED V2, AREA S2
VIRTUAL IMAGE TRANSFORMATION UNIT
101
104
105

# FIG. 2

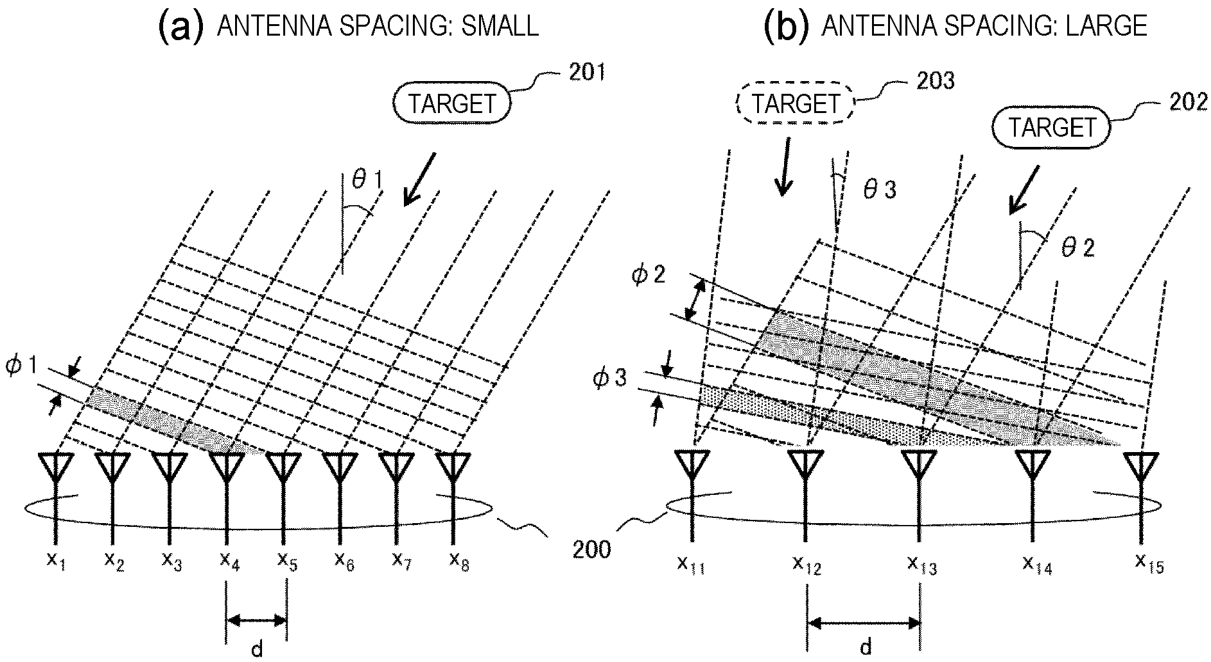
(a) ANTENNA SPACING: SMALL
(b) ANTENNA SPACING: LARGE
TARGET
201
θ1
φ1
x1 x2 x3 x4 x5 x6 x7 x8
d
200
TARGET
203
TARGET
202
θ3
θ2
φ2
φ3
x11 x12 x13 x14 x15
d

FIG. 3

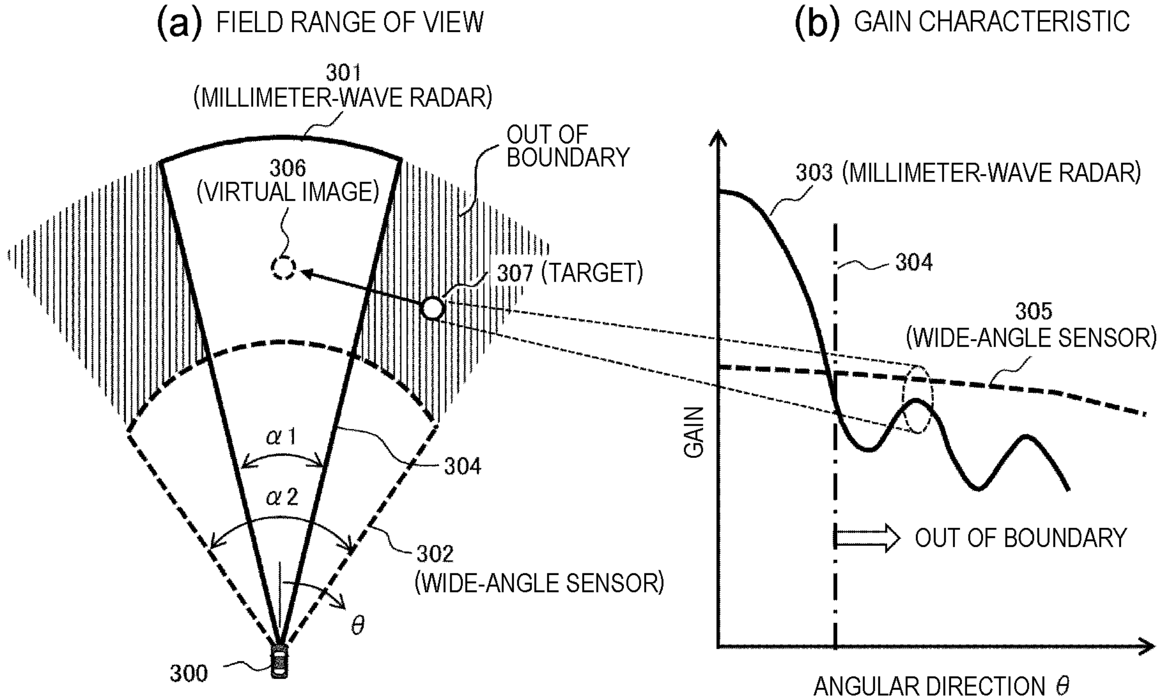
(a) FIELD RANGE OF VIEW
301
(MILLIMETER-WAVE RADAR)
OUT OF BOUNDARY
306
(VIRTUAL IMAGE)
307 (TARGET)
α1
304
α2
302
(WIDE-ANGLE SENSOR)
θ
300
(b) GAIN CHARACTERISTIC
303 (MILLIMETER-WAVE RADAR)
304
305
(WIDE-ANGLE SENSOR)
GAIN
OUT OF BOUNDARY
ANGULAR DIRECTION θ

FIG. 4

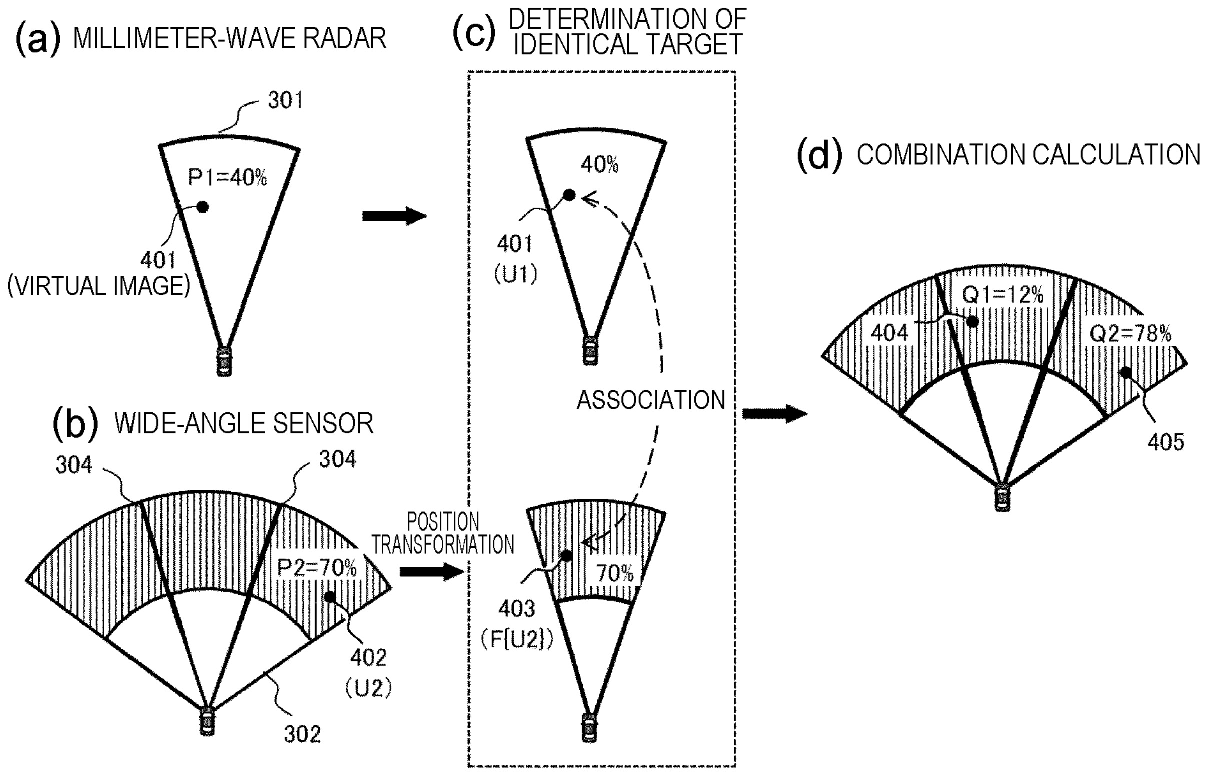
(a) MILLIMETER-WAVE RADAR
301
P1=40%
401
(VIRTUAL IMAGE)
(b) WIDE-ANGLE SENSOR
304
304
P2=70%
402
(U2)
302
POSITION TRANSFORMATION
(c) DETERMINATION OF IDENTICAL TARGET
40%
401
(U1)
ASSOCIATION
70%
403
(F[U2])
(d) COMBINATION CALCULATION
Q1=12%
404
Q2=78%
405

FIG. 5

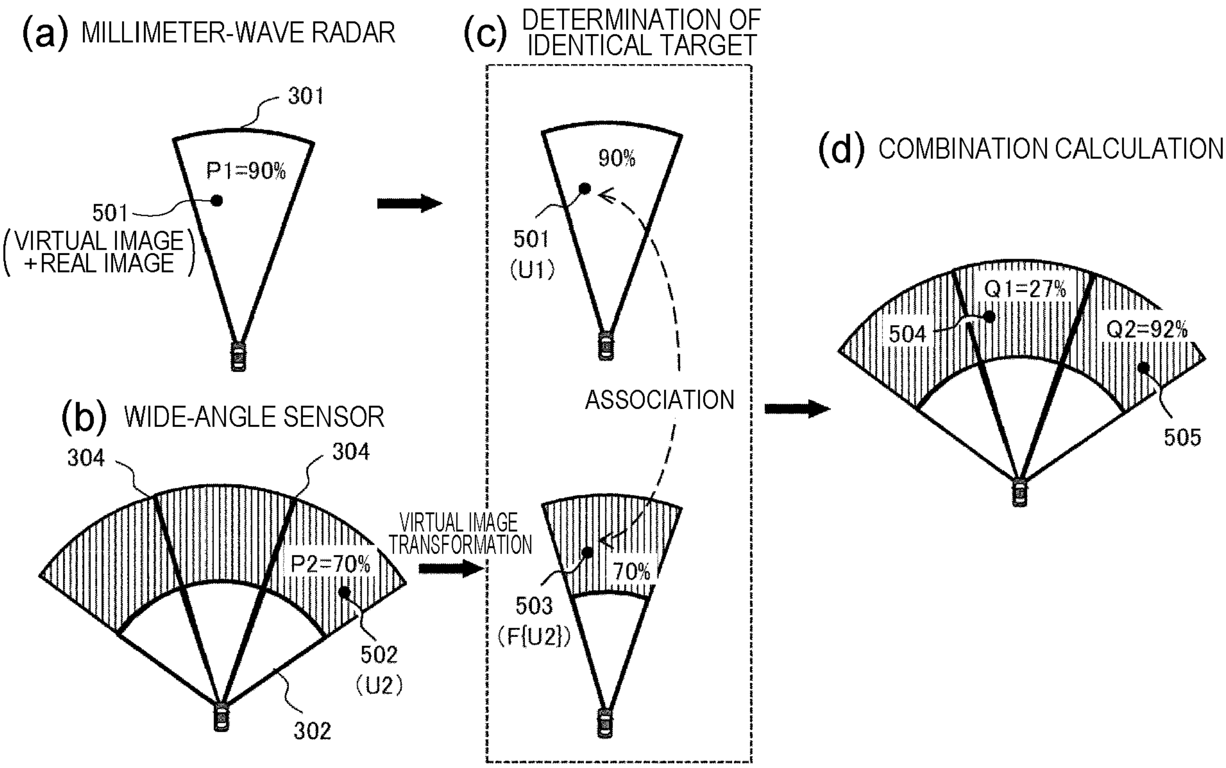
(a) MILLIMETER-WAVE RADAR
301
P1=90%
501
(VIRTUAL IMAGE +REAL IMAGE)
(b) WIDE-ANGLE SENSOR
304
304
P2=70%
502
(U2)
302
VIRTUAL IMAGE TRANSFORMATION
(c) DETERMINATION OF IDENTICAL TARGET
90%
501
(U1)
ASSOCIATION
70%
503
(F{U2})
(d) COMBINATION CALCULATION
Q1=27%
504
Q2=92%
505

FIG. 6

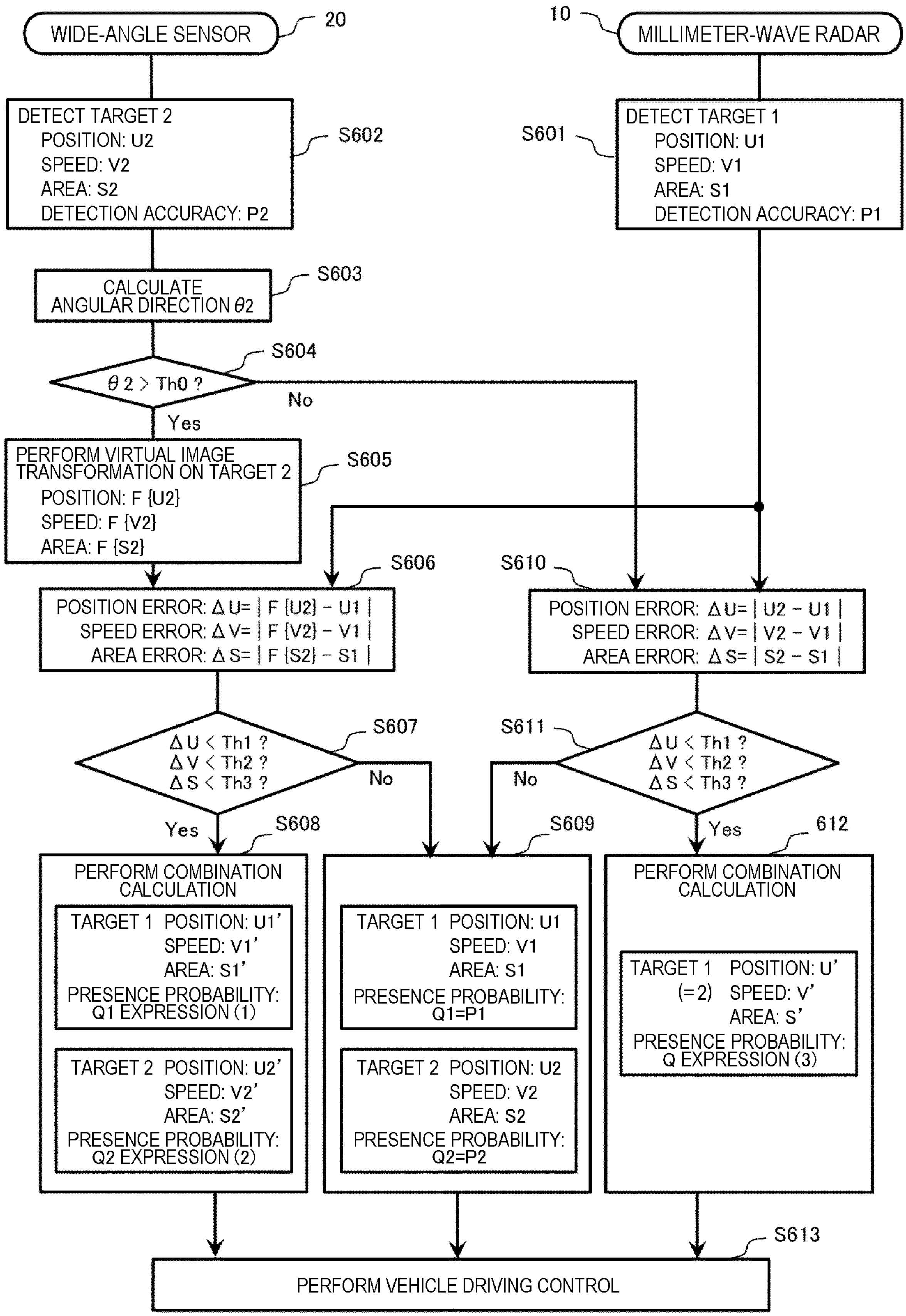
WIDE-ANGLE SENSOR
20
10
MILLIMETER-WAVE RADAR
DETECT TARGET 2
POSITION: U2
SPEED: V2
AREA: S2
DETECTION ACCURACY: P2
S602
S601
DETECT TARGET 1
POSITION: U1
SPEED: V1
AREA: S1
DETECTION ACCURACY: P1
CALCULATE ANGULAR DIRECTION θ2
S603
S604
θ2 > Th0 ?
No
Yes
PERFORM VIRTUAL IMAGE TRANSFORMATION ON TARGET 2
POSITION: F {U2}
SPEED: F {V2}
AREA: F {S2}
S605
S606
S610
POSITION ERROR: ΔU= | F {U2} − U1 |
SPEED ERROR: ΔV= | F {V2} − V1 |
AREA ERROR: ΔS= | F {S2} − S1 |
POSITION ERROR: ΔU= | U2 − U1 |
SPEED ERROR: ΔV= | V2 − V1 |
AREA ERROR: ΔS= | S2 − S1 |
S607
S611
ΔU < Th1 ?
ΔV < Th2 ?
ΔS < Th3 ?
No
No
ΔU < Th1 ?
ΔV < Th2 ?
ΔS < Th3 ?
Yes
S608
S609
Yes
612
PERFORM COMBINATION CALCULATION
TARGET 1 POSITION: U1'
SPEED: V1'
AREA: S1'
PRESENCE PROBABILITY: Q1 EXPRESSION (1)
TARGET 2 POSITION: U2'
SPEED: V2'
AREA: S2'
PRESENCE PROBABILITY: Q2 EXPRESSION (2)
TARGET 1 POSITION: U1
SPEED: V1
AREA: S1
PRESENCE PROBABILITY: Q1=P1
TARGET 2 POSITION: U2
SPEED: V2
AREA: S2
PRESENCE PROBABILITY: Q2=P2
PERFORM COMBINATION CALCULATION
TARGET 1 (=2) POSITION: U'
SPEED: V'
AREA: S'
PRESENCE PROBABILITY: Q EXPRESSION (3)
S613
PERFORM VEHICLE DRIVING CONTROL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015068724 A
- JP 2007263986 A
- US 2014218228 A1
- JP 2012058018 A
- JP 2014139536 A